# EUROPÄISCHE PATENTSCHRIFT

(11) **EP 3 051 063 B1**
(45) Veröffentlichungstag und Bekanntmachung des Hinweises auf die Patenterteilung: **09.10.2019**
(21) Anmeldenummer: 15152776.9
(22) Anmeldetag: 28.01.2015
(51) Int. Cl.: F01D 5/16, F01D 5/26, F01D 17/16, F04D 29/66, F16F 15/14, F16F 7/10

(54) **Verstellbare Leitschaufel, zugehörige Turbomaschine und Herstellungsverfahren**
Variable guide vane, corresponding turbomachine and manufacturing method
Aube statorique à calage variable, turbo-machine et procédé de fabrication associés

(43) Veröffentlichungstag der Anmeldung: 03.08.2016
(73) Patentinhaber: MTU Aero Engines AG, 80995 München (DE)
(72) Erfinder: Hartung, Andreas, 81829 München (DE)

(56) Entgegenhaltungen:
- EP-A1- 2 806 105
- EP-A2- 0 467 427
- WO-A2-2014/007895

## Beschreibung

Die Arbeiten, die zu dieser Erfindung geführt haben, wurden gemäß der *Finanzhilfevereinbarung* Nr. CSJU-GAM-SAGE-2008-001 im Zuge des Siebten Rahmenprogramms der Europäischen Union (*FP7*/*2007-2013*) für Clean Sky Joint Technology Initiative gefördert.

Die vorliegende Erfindung betrifft eine verstellbare Leitschaufel für eine Turbomaschine, eine Turbomaschine mit der Leitschaufel sowie ein Verfahren zum Herstellen der Leitschaufel.

Aus der US 2013/0195651 A1 ist eine Dämpfungsanordnung für eine verstellbare Leitschaufel mit einer äußeren und einer inneren Buchse bekannt, welche ein elastomeres Material aufweist.

Aus der WO 2012/095067 A1 ist eine Turbomaschinenschaufel mit Stimm- bzw. Impulskörpern bekannt, die Resonanzen der Schaufel im Wesentlichen nicht dissipativ durch Reibung, sondern durch Stoßkontakte reduzieren.

Das Dokument WO2014/007895 A2 offenbart eine verstellbare Leitschaufel mit einem im Drehteller der Leitschaufel angeordneten elastischen Dämpfer. Das Dokument EP2806105 A1 offenbart eine nicht verstellbare Leitschaufel mit einer im Deckband dieser Schaufel angeordneten Stoßkammer zur Schwingungsdämpfung.

Eine Aufgabe einer Ausführung der vorliegenden Erfindung ist es, eine Turbomaschine zu verbessern.

Diese Aufgabe wird durch eine verstellbare Leitschaufel für eine Turbomaschine mit den Merkmalen des Anspruchs 1 gelöst. Die Ansprüche 11, 13 stellen eine Turbomaschine mit einer hier beschriebenen Leitschaufel bzw. ein Verfahren zum Herstellen einer hier beschriebenen Leitschaufel unter Schutz. Vorteilhafte Ausführungsformen der Erfindung sind Gegenstand der Unteransprüche.

Nach der vorliegenden Erfindung weist eine verstellbare Leitschaufel für eine Turbomaschine, insbesondere wenigstens eine verstellbare Leitschaufel einer Turbomaschine, ein Schaufelblatt zur Strömungsumlenkung und einen Drehteller mit einer ersten Stoßkammer auf, in der wenigstens ein, insbesondere genau ein, Impulskörper mit Bewegungsspiel angeordnet ist.

Es hat sich überraschend gezeigt, dass durch eine solche Stoßkammer mit Impulskörpern Resonanzen einer verstellbaren Leitschaufel besonders vorteilhaft reduziert werden können.

Die Turbomaschine ist in einer Ausführung eine Axialturbomaschine, insbesondere ein Verdichter oder eine Turbine einer Gasturbine, insbesondere einer Flugtriebwerkgasturbine.

Der Drehteller weist in einer Ausführung eine zylinderartige Außenkontur auf. Er ist in einer Ausführung drehbar vollständig oder teilweise in einer turbomaschinengehäusefesten Aussparung aufgenommen bzw. hierzu ausgebildet bzw. vorgesehen. In einer Weiterbildung ist die verstellbare Leitschaufel durch den Drehteller um ihre Drehachse drehbar an einem turbomaschinengehäusefesten Lager gelagert. Zusätzlich oder alternativ kann die verstellbare Leitschaufel einen Drehzapfen aufweisen, der um die Drehachse der Leitschaufel drehbar in einem gehäusefesten Lager der Turbomaschine gelagert bzw. hierzu ausgebildet bzw. vorgesehen ist, wobei der Drehteller dann radial zwischen dem Drehzapfen und dem Schaufelblatt angeordnet sein, insbesondere in den Drehzapfen und/oder das Schaufelblatt übergehen, und/oder mit Spiel in der Aussparung aufgenommen sein kann. In einer Weiterbildung weist der Drehzapfen einen kleineren Außendurchmesser als der Drehteller auf.

Der Drehteller ist in einer Ausführung radial außen bzw. auf einer von einer Rotationsachse der Turbomaschine abgewandten Seite des Schaufelblattes angeordnet. Eine solche radial äußere Anordnung einer Stoßkammer mit Impulskörpern kann insbesondere lager- und/oder schwingungstechnisch vorteilhaft sein. Gleichermaßen kann der Drehteller in einer Ausführung radial innen bzw. auf einer der Rotationsachse der Turbomaschine zugewandten Seite des Schaufelblattes angeordnet sein.

Eine solche radial innere Anordnung einer Stoßkammer mit Impulskörpern kann insbesondere für andere Schwingungsformen vorteilhaft sein. In einer Ausführung weist die verstellbare Leitschaufel sowohl einen radial äußeren Drehteller als auch einen radial inneren Drehteller auf, wobei der radial äußere und/oder der radial innere Drehteller in der hier beschriebenen Weise ausgebildet sind, insbesondere jeweils eine erste Stoßkammer aufweisen, in der ein Impulskörper mit Bewegungsspiel angeordnet ist. Eine erste Stoßkammer eines radial inneren und eines radial äußeren Drehtellers können gleich oder unterschiedlich sein, insbesondere für unterschiedliche Schwingungsformen.

Erfindungsgemäß weisen der radial äußere und/oder der radial innere Drehteller eine oder mehrere zweite Stoßkammern auf, die mit der ersten Stoßkammer in einer ersten Matrixrichtung fluchten und in denen jeweils wenigstens ein, insbesondere genau ein, Impulskörper mit Bewegungsspiel angeordnet ist. Zusätzlich weisen der radial äußere und/oder der radial innere Drehteller jeweils eine dritte Stoßkammer auf, die mit der ersten Stoßkammer in einer von der ersten Matrixrichtung verschiedenen zweiten Matrixrichtung flucht und in der wenigstens ein, insbesondere genau ein, Impulskörper mit Bewegungsspiel angeordnet ist. Die erste und zweite Matrixrichtung schließen in einer Ausführung einen Winkel von wenigstens 3°, insbesondere wenigstens 30°, und/oder höchstens 15°, insbesondere höchstens 150°, miteinander ein. Die erste, die zweite und die dritte Stoßkammer sind auf einem Kreisbogen um die Drehachse der Leitschaufel angeordnet. Die erste Matrixrichtung des radial äußeren Drehtellers und die erste Matrixrichtung des radial inneren Drehtellers können parallel oder gegeneinander geneigt bzw. verdreht sein. Zusätzlich oder alternativ können die zweite Matrixrichtung des radial äußeren Drehtellers und die zweite Matrixrichtung des radial inneren Drehtellers parallel oder gegeneinander geneigt bzw. verdreht sein.

In einer Weiterbildung weisen der radial äußere und/oder der radial innere Drehteller jeweils eine oder mehrere vierte Stoßkammern auf, die von der ersten Stoßkammer in der ersten und zweiten Matrixrichtung beabstandet sind, insbesondere mit einer zweiten Stoßkammer in der zweiten Matrixrichtung und/oder einer dritten Stoßkammer in der ersten Matrixrichtung fluchten und/oder in einer Ebene mit der ersten und einer zweiten und einer dritten Stoßkammer angeordnet sind, und in denen jeweils wenigstens ein, insbesondere genau ein, Impulskörper mit Bewegungsspiel angeordnet ist. In einer Weiterbildung sind die erste, die zweite, die dritte und die vierte Stoßkammer auf einem Kreisbogen um die Drehachse der Leitschaufel, vorzugsweise äquidistant, angeordnet.

In einer Ausführung sind die erste Stoßkammer, eine oder mehrere, insbesondere alle, zweiten Stoßkammern, eine oder mehrere, insbesondere alle, dritten Stoßkammern und gegebenenfalls eine oder mehrere, insbesondere alle, vierten Stoßkammern eines Drehtellers in einer gemeinsamen Ebene angeordnet. Insbesondere können die erste und wenigstens eine zweite und wenigstens eine dritte und wenigstens eine vierte Stoßkammer matrix-, insbesondere äquidistant bzw. schachbrettartig, verteilt sein.

In einer Ausführung sind wenigstens eine dritte Stoßkammer und die erste Stoßkammer und/oder wenigstens eine zweite Stoßkammer und/oder wenigstens eine vierte Stoßkammer des radial äußeren und/oder des radial inneren Drehtellers baugleich ausgebildet, weisen insbesondere dieselben Abmessungen auf und/oder sind aus dem gleichen Material hergestellt. Zusätzlich oder alternativ sind wenigstens eine dritte Stoßkammer und die erste Stoßkammer und/oder wenigstens eine zweite Stoßkammer und/oder wenigstens eine vierte Stoßkammer des radial äußeren und/oder des radial inneren Drehtellers unterschiedlich ausgebildet, weisen insbesondere verschiedene Abmessungen auf und/oder sind aus unterschiedlichem Material hergestellt. Zusätzlich oder alternativ sind wenigstens ein in einer dritten Stoßkammer angeordneter Impulskörper und der in der ersten Stoßkammer angeordnete Impulskörper und/oder wenigstens ein in einer zweiten Stoßkammer angeordneter Impulskörper und/oder wenigstens ein in einer vierten Stoßkammer angeordneter Impulskörper des radial äußeren und/oder des radial inneren Drehtellers baugleich ausgebildet, weisen insbesondere dieselben Abmessungen auf und/oder sind aus dem gleichen Material hergestellt. Zusätzlich oder alternativ sind wenigstens ein in einer dritten Stoßkammer angeordneter Impulskörper und der in der ersten Stoßkammer angeordnete Impulskörper und/oder wenigstens ein in einer zweiten Stoßkammer angeordneter Impulskörper und/oder wenigstens ein in einer vierten Stoßkammer angeordneter Impulskörper des radial äußeren und/oder des radial inneren Drehtellers unterschiedlich ausgebildet, weisen insbesondere verschiedene Abmessungen auf und/oder sind aus unterschiedlichem Material hergestellt.

Es hat sich überraschend gezeigt, dass durch einen solchen Versatz von wenigstens drei Stoßkammern mit Impulskörpern in wenigstens zwei Richtungen Resonanzen der Schaufel besonders vorteilhaft reduziert werden können.

In einer Ausführung weisen eine oder mehrere Stoßkammern des radial äußeren und/oder des radial inneren Drehtellers jeweils in wenigstens einer ersten und einer zweiten Stoßrichtung, in denen der jeweilige Impulskörper Bewegungsspiel aufweist und die miteinander einen Winkel von wenigstens 30° und höchstens 150°, insbesondere einen Winkel zwischen 85° und 95°, und/oder mit der Drehachse der verstellbaren Leitschaufel jeweils einen Winkel von wenigstens 75° und höchstens 105°, insbesondere einen Winkel zwischen 85° und 95°, einschließen, jeweils einander gegenüberliegende Wandungen auf, wobei ein Abstand zwischen den in der ersten Stoßrichtung einander gegenüberliegenden Wandungen und ein Abstand zwischen den in der zweiten Stoßrichtung einander gegenüberliegenden Wandungen um höchstens 10%, insbesondere um höchstens 5% differiert, insbesondere gleich ist.

Weist beispielsweise eine Stoßkammer einen quadratischen Querschnitt senkrecht zur Drehachse auf, so sind die Abstände in den beiden Stoßrichtungen parallel zu Seitenwänden des quadratischen Querschnitts, die miteinander und mit der Drehachse jeweils einen Winkel von 90° einschließen, gleich. Weist eine Stoßkammer beispielsweise einen kreisförmigen Querschnitt senkrecht zur Drehachse auf, so sind die Abstände in allen Stoßrichtungen, die mit der Drehachse einen Winkel von 90° einschließen, gleich.

Es hat sich überraschend gezeigt, dass durch solche, wenigstens im Wesentlichen, gleichen Abstände einander gegenüberliegender Wandungen von Stoßkammern in wenigstens zwei Stoßrichtungen, in denen der jeweilige Impulskörper Bewegungsspiel aufweist, Resonanzen der Schaufel besonders vorteilhaft reduziert werden können, insbesondere, sofern diese Stoßrichtungen, wenigstens im Wesentlichen, senkrecht zur Drehachse sind. Das Bewegungsspiel in wenigstens einer Stoßrichtung beträgt in einer Ausführung wenigstens 0,01 mm, insbesondere wenigstens 0,1 mm, und/oder höchstens 1,5 mm, insbesondere höchstens 1,2 mm.

In einer Weiterbildung schließt wenigstens eine Wandung einer Stoßkammer, insbesondere eine der vorstehend genannten, einander gegenüberliegenden Wandungen, mit der Drehachse der Schaufel einen Winkel von höchstens 15°, insbesondere höchstens 5°, ein. Durch eine solche, wenigstens im Wesentlichen, radiale Wandung können Resonanzen der Schaufel besonders vorteilhaft reduziert werden.

In einer Weiterbildung ist wenigstens eine Wandung einer Stoßkammer, insbesondere eine der vorstehend genannten, einander gegenüberliegenden Wandungen und/oder wenigstens eine Wandung, die mit der Drehachse der Schaufel einen Winkel von wenigstens 75° und/oder höchstens 105° einschließt, eben bzw. plan. Durch eine solche Wandung können besonders vorteilhafte Stoßkontakte induziert werden.

In einer Weiterbildung weist wenigstens eine der Stoßkammern einen kreisförmigen oder polygonalen, insbesondere vier-, fünf- oder sechseckigen, Querschnitt auf. In einer Ausführung weist eine solche Stoßkammer senkrecht zu diesem Querschnitt einen polygonalen, insbesondere vier-, fünf- oder sechseckigen, Querschnitt auf. Eine Stoßkammer kann also insbesondere kreiszylinderförmig ausgebildet sein, so dass sie einen kreisförmigen und senkrecht hierzu einen viereckigen Querschnitt aufweist.

In einer Weiterbildung weisen ein oder mehrere, insbesondere alle, Impulskörper jeweils eine Masse von wenigstens 0,01 g und/oder höchstens 0,075 g auf. Zusätzlich oder alternativ beträgt in einer Ausführung eine Dichte eines oder mehrerer, insbesondere aller, Impulskörper höchstens 80%, insbesondere höchstens 70%, einer Dichte des Schaufelblatts. Es hat sich überraschend herausgestellt, dass durch diese Abstimmung der Dichten von Impulskörper und Schaufelblättern deren Resonanzen besonders vorteilhaft reduziert werden können.

In einer Weiterbildung sind ein oder mehrere, insbesondere alle, Impulskörper kugelförmig. Zusätzlich oder alternativ können in einer Ausführung ein oder mehrere, insbesondere alle, Impulskörper Keramik, insbesondere Oxidkeramik, insbesondere Zirconiumdioxid (ZrO2), aufweisen, insbesondere hieraus bestehen.

In einer Weiterbildung sind bzw. werden eine oder mehrere, insbesondere alle Stoßkammern (material)abtragend in dem Drehteller, insbesondere durch Erodieren und/oder elektrochemisches Abtragen ("Electrochemical Machining" ECM), insbesondere PECM ("Pulsed Electrochemical Machining") oder PE(C)M ("Precise Electrochemical Machining"), des Drehtellers hergestellt. Dadurch können vorteilhafte Innengeometrien und/oder Oberflächen der Stoßkammern hergestellt werden. Zusätzlich oder alternativ sind bzw. werden eine oder mehrere, insbesondere alle Stoßkammern nach Anordnung des Impulskörpers stoffschlüssig, insbesondere durch Schweißen, Löten und/oder Kleben, verschlossen. Dadurch können vorteilhaft geschlossene Stoßkammern hergestellt werden.

In einer anderen Weiterbildung sind eine oder mehrere, insbesondere alle Stoßkammern des radial äußeren und/oder des radial inneren Drehtellers in einem Impulskörpergehäuse angeordnet, welches separat, insbesondere mehrteilig, hergestellt und mit einem Grundkörper des Drehtellers lösbar oder dauerhaft verbunden ist bzw. wird.

In einer Weiterbildung ist die erste Stoßkammer des radial äußeren und/oder des radial inneren Drehtellers in einem äußeren, von der Drehachse der Leitschaufel abgewandten Ringabschnitt, insbesondere einer außenrandnäheren Hälfte, insbesondere in einem außenrandnäheren Drittel des Drehtellers angeordnet. Hierdurch können Resonanzen der Schaufel besonders vorteilhaft reduziert werden.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: eine verstellbare Leitschaufel einer Turbomaschine nach einer Ausführung der vorliegenden Erfindung in perspektivischer Ansicht;
- Fig. 2: einen Schnitt längs der Linie II-II in Fig. 1; und
- Fig. 3: einen Fig. 2 entsprechenden Schnitt einer verstellbaren Leitschaufel einer Turbomaschine nach einer weiteren Ausführung der vorliegenden Erfindung.

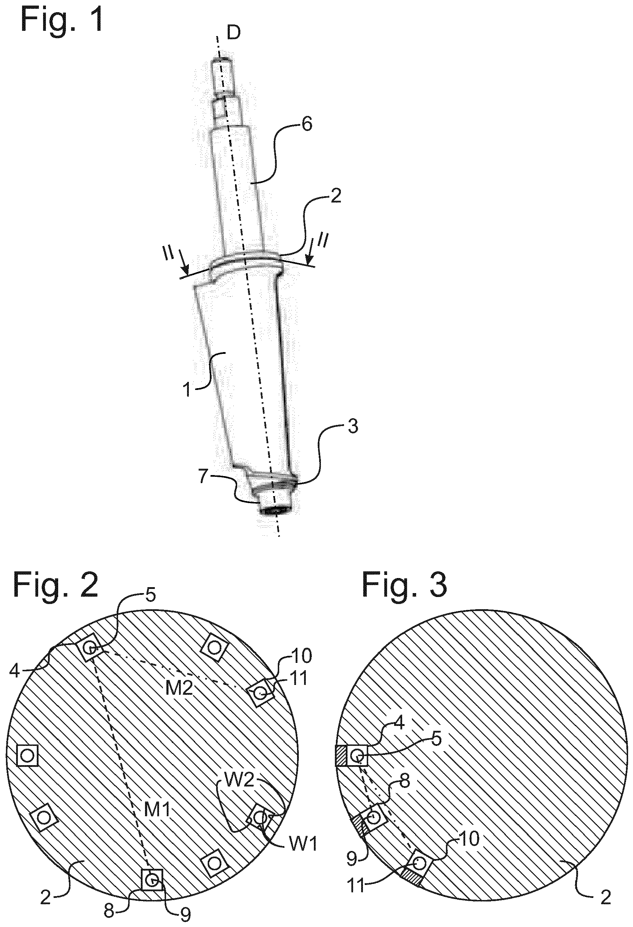

Fig. 1 zeigt eine verstellbare Leitschaufel einer Turbomaschine nach einer Ausführung der vorliegenden Erfindung in perspektivischer Ansicht.

Die verstellbare Leitschaufel weist ein Schaufelblatt 1 zur Strömungsumlenkung, einen radial äußeren Drehteller 2, der in Fig. 2 in einem Schnitt senkrecht zu einer Drehachse D der verstellbaren Leitschaufel dargestellt ist, einen radial äußeren Drehzapfen 6, der um die Drehachse D der Leitschaufel drehbar in einem gehäusefesten Lager der Turbomaschine gelagert ist (nicht dargestellt), einen radial inneren Drehteller 3 und einen radial inneren Drehzapfen 7 auf, der um die Drehachse D der Leitschaufel drehbar in einem gehäusefesten Lager der Turbomaschine gelagert ist (nicht dargestellt). In einer Abwandlung können Fig. 2, 3 zusätzlich oder alternativ auch Schnitte senkrecht zur Drehachse D durch den radial inneren Drehteller 3 sein.

Wie im Schnitt der Fig. 2 erkennbar, weist der radial äußere Drehteller 2 (in der Abwandlung zusätzlich oder alternativ der radial innere Drehteller 3) eine erste Stoßkammer 4 auf, in der ein Impulskörper 5 mit Bewegungsspiel angeordnet ist.

Der radial äußere Drehteller 2 (in der Abwandlung zusätzlich oder alternativ der radial innere Drehteller 3) weist eine zweite Stoßkammer 8 auf, die mit der ersten Stoßkammer 4 in einer ersten, in Fig. 2 gestrichelt angedeuteten Matrixrichtung M1 fluchtet und in der ein Impulskörper 9 mit Bewegungsspiel angeordnet ist. Zusätzlich weist der radial äußere Drehteller 2 (in der Abwandlung zusätzlich oder alternativ der radial innere Drehteller 3) eine dritte Stoßkammer 10 auf, die mit der ersten Stoßkammer 4 in einer von der ersten Matrixrichtung verschiedenen zweiten, in Fig. 2 doppel-strichpunktiert angedeuteten Matrixrichtung M2 fluchtet und in der ein Impulskörper 11 mit Bewegungsspiel angeordnet ist. Die erste und zweite Matrixrichtung schließen einen Winkel von etwa 60° miteinander ein.

Der radial äußere Drehteller 2 (in der Abwandlung zusätzlich oder alternativ der radial innere Drehteller 3) weist mehrere vierte Stoßkammern auf, die jeweils von der ersten Stoßkammer 4 in der ersten und zweiten Matrixrichtung unterschiedlich beabstandet sind und in denen jeweils ein Impulskörper mit Bewegungsspiel angeordnet ist. Die erste Stoßkammer 4, die zweite Stoßkammer 8, die dritte Stoßkammer 10 und die vierten Stoßkammern sind in einer gemeinsamen Ebene auf einem Kreisbogen um die Drehachse der Leitschaufel angeordnet.

Im Ausführungsbeispiel sind alle Stoßkammern und die darin angeordneten Impulskörper jeweils baugleich ausgebildet. In einer nicht dargestellten Abwandlung können Stoßkammern und/oder Impulskörper auch unterschiedlich ausgebildet sein.

Im Ausführungsbeispiel der Fig. 1, 2 sind die Stoßkammern quaderförmig, wobei die Stoßkammern in einer ersten und einer zweiten Stoßrichtung parallel zu Seitenwänden des jeweiligen Querschnitts der Stoßkammer in Fig. 2, in denen der jeweilige Impulskörper Bewegungsspiel aufweist und die miteinander und mit der Drehachse D der verstellbaren Leitschaufel jeweils einen Winkel von 90° einschließen, jeweils einander gegenüberliegende Wandungen aufweisen, wobei ein Abstand zwischen den in der ersten Stoßrichtung einander gegenüberliegenden Wandungen und ein Abstand zwischen den in der zweiten Stoßrichtung einander gegenüberliegenden Wandungen gleich ist. Das Bewegungsspiel in diesen Stoßrichtungen beträgt wenigstens 0,01 mm und höchstens 1,5 mm. Exemplarisch sind in Fig. 2 die einander in der ersten Stoßrichtung gegenüberliegenden Wandungen einer vierten Stoßkammer mit W1 bezeichnet, die einander in der zweiten Stoßrichtung gegenüberliegenden Wandungen dieser Stoßkammer mit W2.

Die ebenen Wandungen W schließen mit der Drehachse D der Schaufel einen Winkel von 0° ein.

Die kugelförmigen Impulskörper bestehen im Ausführungsbeispiel aus ZrO₂ und weisen jeweils eine Masse zwischen 0,01 g und 0,075 g auf, wobei ihre Dichte höchstens 80% einer Dichte des Schaufelblatts 1 beträgt.

Die Stoßkammern sind bzw. werden materialabtragend durch Erodieren oder elektrochemisches Abtragen hergestellt. Zusätzlich sind bzw. werden die Stoßkammern nach Anordnung des jeweiligen Impulskörpers stoffschlüssig durch Schweißen, Löten oder Kleben verschlossen.

Wie im Schnitt der Fig. 2 erkennbar, sind die Stoßkammern des radial äußeren Drehtellers 2 (in der Abwandlung zusätzlich oder alternativ des radial inneren Drehtellers 3) in einem äußeren, von der Drehachse der Leitschaufel abgewandten Ringabschnitt, insbesondere in einem außenrandnäheren Drittel des Drehtellers angeordnet.

Fig. 3 zeigt einen Fig. 2 entsprechenden Schnitt durch einen radial äußeren (in einer Abwandlung zusätzlich oder alternativ einen radial inneren) Drehteller einer verstellbaren Leitschaufel einer Turbomaschine nach einer weiteren Ausführung der vorliegenden Erfindung. Diese weitere Ausführung entspricht bis auf die nachfolgend erläuterten Unterschiede der vorstehend mit Bezug auf Fig. 1, 2 erläuterten Ausführung, so dass einander entsprechende Merkmale durch identische Bezugszeichen identifiziert sind, auf die vorstehende Beschreibung Bezug genommen und nachfolgend nur auf die Unterschiede eingegangen wird.

In der Ausführung der Fig. 3 weist der radial äußere Drehteller 2 (in der Abwandlung zusätzlich oder alternativ der radial innere Drehteller 3, vgl. Fig. 1) nur eine erste Stoßkammer 4 mit Impulskörper 5, eine zweite Stoßkammer 8 mit Impulskörper 9 und eine dritte Stoßkammer 10 mit Impulskörper 11 auf, die jeweils baugleich miteinander sind.

Die erste und zweite Matrixrichtung schließen in der Ausführung der Fig. 3 einen Winkel von etwa 15° ein.

Während die Stoßkammern der Ausführung der Fig. 2 von einer in Bezug auf die Rotationsachse der Turbomaschine radialen Stirnseite des Drehtellers aus materialabtragend hergestellt und nach Anordnung des Impulskörpers durch einen Deckel verschlossen sind bzw. werden, der mit dem Drehteller verschweißt, -lötet oder -klebt ist bzw. wird, sind bzw. werden die Stoßkammern 4, 8 und 10 in der Ausführung der Fig. 3 von einem Außenumfang bzw. einer Mantelfläche des Drehtellers aus materialabtragend hergestellt und nach Anordnung des Impulskörpers 5, 9 bzw. 11 durch einen Deckel verschlossen, der mit dem Drehteller verschweißt, -lötet oder -klebt ist bzw. wird. In einem Schnitt senkrecht zum Schnitt der Fig. 3 können die Stoßkammern 4, 8 und 10 einen quadratischen oder kreisförmigen Querschnitt aufweisen.

Obwohl in der vorhergehenden Beschreibung exemplarische Ausführungen erläutert wurden, sei darauf hingewiesen, dass eine Vielzahl von Abwandlungen möglich ist. Außerdem sei daraufhingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 1: Schaufelblatt
- 2: radial äußerer Drehteller
- 3: radial innerer Drehteller
- 4: erste Stoßkammer
- 5: Impulskörper
- 6: radial äußerer Drehzapfen
- 7: radial innerer Drehzapfen
- 8: zweite Stoßkammer
- 9: Impulskörper
- 10: dritte Stoßkammer
- 11: Impulskörper

- D: Drehachse
- M1: erste Matrixrichtung
- M2: zweite Matrixrichtung
- W1, W2: Wandung

## Patentansprüche

1. Verstellbare Leitschaufel für eine Turbomaschine, mit einem Schaufelblatt (1) und einem Drehteller (2, 3), **dadurch gekennzeichnet, dass** der Drehteller eine erste Stoßkammer (4) aufweist, in der ein Impulskörper (5) mit Bewegungsspiel angeordnet ist, wobei der Drehteller wenigstens eine zweite Stoßkammer (8), die mit der ersten Stoßkammer (4) in einer ersten Matrixrichtung (M1) fluchtet und in der ein Impulskörper (9) mit Bewegungsspiel angeordnet ist, und wenigstens eine dritte Stoßkammer (10) aufweist, die mit der ersten Stoßkammer (4) in einer von der ersten Matrixrichtung (M1) verschiedenen zweiten Matrixrichtung (M2) fluchtet und in der ein Impulskörper (11) mit Bewegungsspiel angeordnet ist, und wobei die erste, zweite und dritte Stoßkammer (4, 8, 10) auf einem Kreisbogen um die Drehachse (D) der Leitschaufel angeordnet sind.

2. Verstellbare Leitschaufel nach dem vorhergehenden Anspruch, **dadurch gekennzeichnet, dass** die erste Stoßkammer (4) in wenigstens einer ersten und einer zweiten Stoßrichtung, die miteinander einen Winkel von wenigstens 30° und höchstens 150° und/oder mit der Drehachse (D) der Leitschaufel jeweils einen Winkel von wenigstens 75° und höchstens 105° einschließen, jeweils einander gegenüberliegende Wandungen (W1, W2) aufweist, wobei ein Abstand zwischen den in der ersten Stoßrichtung einander gegenüberliegenden Wandungen (W1) und ein Abstand zwischen den in der zweiten Stoßrichtung einander gegenüberliegenden Wandungen (W2) um höchstens 10% differiert.

3. Verstellbare Leitschaufel nach dem vorhergehenden Anspruch, **dadurch gekennzeichnet, dass** wenigstens eine der Wandungen (W1, W2) mit der Drehachse (D) der Leitschaufel einen Winkel von höchstens 15° einschließt.

4. Verstellbare Leitschaufel nach einem der vorhergehenden Ansprüche, **dadurch gekennzeichnet, dass** wenigstens eine der Wandungen (W1, W2) eben ist.

5. Verstellbare Leitschaufel nach einem der vorhergehenden Ansprüche, **dadurch gekennzeichnet, dass** die erste Stoßkammer (4) wenigstens einen kreisförmigen oder polygonalen, insbesondere vier-, fünf- oder sechseckigen, Querschnitt aufweist.

6. Verstellbare Leitschaufel nach einem der vorhergehenden Ansprüche, **dadurch gekennzeichnet, dass** eine Masse des in der ersten Stoßkammer (4) angeordneten Impulskörpers (5) wenigstens 0,01 g und/oder höchstens 0,075 g beträgt.

7. Verstellbare Leitschaufel nach einem der vorhergehenden Ansprüche, **dadurch gekennzeichnet, dass** eine Dichte des in der ersten Stoßkammer (4) angeordneten Impulskörpers (5) höchstens 80% einer Dichte des Schaufelblatts beträgt.

8. Verstellbare Leitschaufel nach einem der vorhergehenden Ansprüche, **dadurch gekennzeichnet, dass** der in der ersten Stoßkammer (4) angeordnete Impulskörper (5) kugelförmig ist und/oder Keramik aufweist.

9. Verstellbare Leitschaufel nach einem der vorhergehenden Ansprüche, **dadurch gekennzeichnet, dass** die erste Stoßkammer (4) abtragend, insbesondere durch Erodieren und/oder elektrochemisches Abtragen, hergestellt und/oder nach Anordnung des Impulskörpers (5) stoffschlüssig, insbesondere durch Schweißen, Löten und/oder Kleben, verschlossen ist.

10. Verstellbare Leitschaufel nach einem der vorhergehenden Ansprüche, **dadurch gekennzeichnet, dass** die erste Stoßkammer (4) in einem äußeren Ringabschnitt des Drehtellers angeordnet ist.

11. Turbomaschine, insbesondere Verdichter einer Gasturbine, mit wenigstens einer verstellbaren Leitschaufel nach einem der vorhergehenden Ansprüche, die um die Drehachse (D) der Leitschaufel drehbar an einem turbomaschinengehäusefesten Lager gelagert ist.

12. Turbomaschine nach dem vorhergehenden Anspruch, **dadurch gekennzeichnet, dass** der Drehteller in einer turbomaschinengehäusefesten Aussparung aufgenommen ist.

13. Verfahren zum Herstellen einer verstellbaren Leitschaufel nach einem der vorhergehenden Ansprüche, **dadurch gekennzeichnet, dass** die erste Stoßkammer (4) abtragend, insbesondere durch Erodieren und/oder elektrochemisches Abtragen, hergestellt und/oder nach Anordnung des Impulskörpers (5) stoffschlüssig, insbesondere durch Schweißen, Löten und/oder Kleben, verschlossen wird.

## Claims

1. Adjustable guide vane for a turbomachine, having an airfoil (1) and a rotary table (2, 3), **characterized in that** the rotary table comprises a first impact chamber (4) in which a pulse body (5) is arranged with movement clearance, the rotary table having at least one second impact chamber (8) aligned with the first impact chamber (4) in a first matrix direction (M1) and in which a pulse body (9) is arranged with movement clearance, and at least one third impact chamber (10) which is aligned with the first impact chamber (4) in a second matrix direction (M2) that is different from the first matrix direction (M1) and in which a pulse body (11) is arranged with movement clearance, and the first, second and third impact chambers (4, 8, 10) being arranged on a circular arc about the axis of rotation (D) of the guide vane.

2. Adjustable guide vane according to the preceding claim, **characterized in that** the first impact chamber (4) has walls (W1, W2) opposing one another in at least one first and one second impact direction which together form an angle of at least 30° and at most 150° and/or each form an angle of at least 75° and at most 105° with the axis of rotation (D) of the guide vane, a distance between the walls (W1) opposing one another in the first impact direction and a distance between the walls (W2) opposing one another in the second impact direction differing by at most 10%.

3. Adjustable guide vane according to the preceding claim, **characterized in that** at least one of the walls (W1, W2) forms an angle of at most 15° with the axis of rotation (D) of the guide vane.

4. Adjustable guide vane according to any of the preceding claims, **characterized in that** at least one of the walls (W1, W2) is flat.

5. Adjustable guide vane according to any of the preceding claims, **characterized in that** the first impact chamber (4) has at least one circular or polygonal, in particular quadrangular, pentagonal or hexagonal, cross section.

6. Adjustable guide vane according to any of the preceding claims, **characterized in that** a mass of the pulse body (5) arranged in the first impact chamber (4) is at least 0.01 g and/or at most 0.075 g.

7. Adjustable guide vane according to any of the preceding claims, **characterized in that** a density of the pulse body (5) arranged in the first impact chamber (4) is at most 80% of a density of the airfoil.

8. Adjustable guide vane according to any of the preceding claims, **characterized in that** the pulse body (5) arranged in the first impact chamber (4) is spherical and/or comprises ceramic material.

9. Adjustable guide vane according to any of the preceding claims, **characterized in that** the first impact chamber (4) is produced in a removing manner, in particular by erosion and/or electrochemical machining, and/or is sealed, after arrangement of the pulse body (5), integrally, in particular by welding, soldering and/or bonding.

10. Adjustable guide vane according to any of the preceding claims, **characterized in that** the first impact chamber (4) is arranged in an outer ring portion of the rotary table.

11. Turbomachine, in particular compressor of a gas turbine, having at least one adjustable guide vane according to any of the preceding claims, which guide vane is mounted on a bearing fixed to the turbomachine housing such that said vane rotates about the axis of rotation (D) of the guide vane.

12. Turbomachine according to the preceding claim, **characterized in that** the rotary table is accommodated in a recess fixed to the turbomachine housing.

13. Method for producing an adjustable guide vane according to any of the preceding claims, **characterized in that** the first impact chamber (4) is produced in a removing manner, in particular by erosion and/or electrochemical machining, and/or is sealed, after arrangement of the pulse body (5), integrally, in particular by welding, soldering and/or bonding.

## Revendications

1. Aube de guidage réglable d'une turbomachine, comportant une pale d'aube (1) et un plateau tournant (2, 3), **caractérisée en ce que** le plateau tournant comporte une première chambre d'impact (4) dans laquelle est disposé un corps d'impulsion (5) comportant un jeu de mouvement, le plateau tournant comportant au moins une deuxième chambre d'impact (8) alignée avec la première chambre d'impact (4) dans une première direction de matrice (M1) et dans laquelle est disposé un corps d'impulsion (9) comportant un jeu de mouvement, et au moins une troisième chambre d'impact (10) alignée avec la première chambre d'impact (4) dans une deuxième direction de matrice (M2) différente de la première direction de matrice (M1) et dans laquelle un corps d'impulsion (11) comportant un jeu de mouvement est disposé, et les première, deuxième et troisième chambres d'impact (4, 8, 10) étant disposées sur un arc de cercle entourant l'axe de rotation (D) de l'aube de guidage.

2. Aube de guidage réglable selon la revendication précédente, **caractérisée en ce que** la première chambre d'impact (4) comporte des parois respectivement opposées (W1, W2) dans au moins une première et une deuxième direction d'impact, qui forment ensemble un angle d'au moins 30° et d'au plus 150° et/ou un angle d'au moins 75° et d'au plus 105° avec l'axe de rotation (D) de l'aube de guidage, une distance entre les parois (W1) opposées dans la première direction d'impact et une distance entre les parois (W2) opposées dans la deuxième direction d'impact différant au plus de 10 %.

3. Aube de guidage réglable selon la revendication précédente, **caractérisée en ce qu'**au moins l'une des parois (W1, W2) forme un angle d'au plus 15° avec l'axe de rotation (D) de l'aube de guidage.

4. Aube de guidage réglable selon l'une des revendications précédentes, **caractérisée en ce qu'**au moins l'une desdites parois (W1, W2) est plane.

5. Aube de guidage réglable selon l'une des revendications précédentes, **caractérisée en ce qu'**au la première chambre d'impact (4) comporte au moins une section transversale circulaire ou polygonale, en particulier quadrangulaire, pentagonale ou hexagonale.

6. Aube de guidage réglable selon l'une des revendications précédentes, **caractérisée en ce qu'**une masse du corps d'impulsion (5) disposé dans la première chambre d'impact (4) est d'au moins 0,01 g et/ou d'au plus 0,075 g.

7. Aube de guidage réglable selon l'une des revendications précédentes, **caractérisée en ce qu'**une densité du corps d'impulsion (5) disposé dans la première chambre d'impact (4) représente au plus 80 % d'une densité de la pale d'aube.

8. Aube de guidage réglable selon l'une des revendications précédentes, **caractérisée en ce que** le corps d'impulsion (5) disposé dans la première chambre d'impact (4) présente une forme sphérique et/ou une céramique.

9. Aube de guidage réglable selon l'une des revendications précédentes, **caractérisée en ce que** la première chambre d'impact (4) est produite de manière ablative, en particulier par érosion et/ou par ablation électrochimique, et/ou verrouillée par liaison de matière, en particulier par soudage, brasage et/ou collage, après la disposition du corps d'impulsion (5).

10. Aube de guidage réglable selon l'une des revendications précédentes, **caractérisée en ce que** la première chambre d'impact (4) est disposée dans une section annulaire extérieure du plateau tournant.

11. Turbomachine, en particulier compresseur d'une turbine à gaz, comportant au moins une aube de guidage réglable selon l'une des revendications précédentes, laquelle aube de guidage est montée sur un palier fixé au carter de la turbomachine de manière à pouvoir tourner autour de l'axe de rotation (D) de l'aube de guidage.

12. Turbomachine selon la revendication précédente, **caractérisée en ce que** le plateau tournant est monté dans un évidement fixé au carter de la turbomachine.

13. Procédé de fabrication d'une aube de guidage réglable selon l'une des revendications précédentes, **caractérisé en ce que** la première chambre d'impact (4) est produite de manière ablative, en particulier par érosion et/ou par ablation électrochimique, et/ou verrouillée par liaison de matière, en particulier par soudage, brasage et/ou collage, après la disposition du corps d'impulsion (5).
